# EUROPÄISCHE PATENTSCHRIFT

(11) **EP 2 621 650 B1**
(45) Veröffentlichungstag und Bekanntmachung des Hinweises auf die Patenterteilung: **09.12.2020**
(21) Anmeldenummer: 11767963.9
(22) Anmeldetag: 28.09.2011
(51) Int. Cl.: B22F 1/00, C22C 1/04, C22C 24/00, H01M 10/052, H01M 4/04, H01M 4/38

(54) **STABILISIERTES, REINES LITHIUMMETALLPULVER UND VERFAHREN ZU DESSEN HERSTELLUNG**
STABILIZED, PURE LITHIUM METAL POWDER AND METHOD FOR PRODUCING THE SAME
POUDRE MÉTALLIQUE DE LITHIUM STABILISÉE PURE ET SON PROCÉDÉ DE FABRICATION

(30) Priorität: 28.09.2010 DE 102010046699
(43) Veröffentlichungstag der Anmeldung: 07.08.2013
(73) Patentinhaber: Albemarle Germany GmbH, 65926 Frankfurt am Main (DE)
(72) Erfinder: WIETELMANN, Ulrich, 61381 Friedrichsdorf (DE)
(74) Vertreter: Uexküll & Stolberg
(86) Internationale Anmeldenummer: PCT/EP2011/066858
(87) Internationale Veröffentlichungsnummer: WO 2012/052265

(56) Entgegenhaltungen:
- WO-A1-97/06910
- CN-A- 101 418 406
- CN-A- 101 522 343
- US-A1- 2007 006 680
- US-A1- 2008 283 155

## Beschreibung

Beschrieben wird stabilisiertes Lithiummetallpulver sowie ein Verfahren zur Herstellung von stabilisiertem, reinem Lithiummetallpulver durch Dispergierung in einem organischen, inerten Lösungsmittel in Gegenwart von Fettsäuren oder Fettsäureestern.

Lithium gehört zu den Alkalimetallen. Wie auch die schwereren Elementhomologa der ersten Hauptgruppe ist es durch ein starkes Reaktionsvermögen gegenüber einer Vielzahl von Stoffen gekennzeichnet. So reagiert es heftig, häufig unter Entzündung mit Wasser, Alkoholen und anderen Stoffen, die protischen Wasserstoff enthalten. An Luft ist es unbeständig und es reagiert mit Sauerstoff, Stickstoff und Kohlendioxid. Es wird deshalb normalerweise unter Inertgas (Edelgase wie Argon) gehandhabt und unter einer schützenden Schicht aus Paraffinöl gelagert.

Des Weiteren reagiert es mit vielen funktionalisierten Lösungsmitteln, selbst wenn diese keinen protischen Wasserstoff enthalten. Beispielsweise werden zyklische Ether wie THF unter Ringspaltung geöffnet, Ester und Carbonylverbindungen werden generell lithiiert und/oder reduziert. Häufig wird die Reaktion zwischen den genannten Chemikalien bzw. Umweltstoffen durch Wasser katalysiert. So kann Lithiummetall in trockener Luft über längere Zeiträume gelagert und verarbeitet werden, da es eine einigermaßen stabile Passivierungsschicht ausbildet, die weitergehende Korrosion verhindert. Ähnliches gilt für funktionalisierte Lösemittel, beispielsweise N-Methyl-2-pyrrolidon, welches in wasserfreier Form wesentlich weniger reaktiv gegenüber Lithium ist als z.B. mit Wassergehalten > einige 100 ppm.

Um die Lagerfähigkeit von Lithiummetall und die Sicherheit bei der Verarbeitung zu erhöhen, wurde eine Reihe von korrosionsvermindernden Beschichtungsverfahren entwickelt. So ist es beispielsweise aus US 5,567,474 und US 5,776,369 bekannt, geschmolzenes Lihiummetall mit CO₂ zu behandeln. Für die Beschichtung wird typischerweise flüssiges Lithium in einem inerten Kohlenwasserstoff mindestens 1 Minute mit mindestens 0,3 % CO₂ in Verbindung gebracht. Der damit bewirkte Schutz reicht aber für viele Anwendungen, speziell für die Vorlithiierung von Batterieelektrodenmaterialien in N-Methyl-2-pyrrolidon (NMP)-Suspension, nicht aus.

Eine weitere Methode, Lithiummetall zu stabilisieren besteht darin, es über seinen Schmelzpunkt zu erhitzen, das geschmolzene Lithium zu rühren und es mit einem Fluorierungsmittel, beispielsweise Perfluoropentylamin, in Kontakt zu bringen (WO 2007/005983A2). Nachteilig ist, dass Fluorierungsmittel häufig giftig oder ätzend sind und deshalb in der industriellen Praxis ungern eingesetzt werden.

Ein weiteres Verfahren zur schützenden Oberflächenbehandlung von Lithiummetall besteht darin, es mit einer Wachsschicht, beispielsweise einem Polyethylenwachs zu beschichten (WO 2008/045557A1). Nachteilig ist, dass relativ viel Beschichtungsmittel aufzuwenden ist. In den Beispielen der genannten Patentanmeldung etwa 1 %.

US 2008/0283155A1 beschreibt ein Verfahren zur Stabilisierung von Lithiummetall, das durch folgende Schritte gekennzeichnet ist: a) Erhitzen von Lithiummetallpulver über den Schmelzpunkt, um geschmolzenes Lithiummetall herzustellen, b) Dispergieren des geschmolzenen Lithiummetalls; und c) Inkontaktbringen des geschmolzenen Lithiummetalls mit einer Phosphor enthaltenden Substanz, um eine im wesentlichen kontinuierliche Schutzschicht von Lithiumphosphat auf dem Lithiummetallpulver zu erzeugen. Das Hantieren mit sauren, ätzenden Stoffen (Phosphorsäure) generell und insbesondere in Gegenwart von Lithiummetall ist nachteilig: die beiden Stoffe reagieren beim Inkontaktbringen sehr heftig unter erheblicher Wärmefreisetzung miteinander. Darüber hinaus entsteht bei der Umsetzung von Lithiummetall mit Phosphorsäure explosionsgefährliches Wasserstoffgas.

Schließlich wird in US2009/0061321 vorgeschlagen, ein stabilisiertes Lithiummetallpulver mit einer im Wesentlichen kontinuierlichen Polymerbeschichtung herzustellen. Das Polymer kann ausgewählt sein aus der Gruppe Polyurethane, PTFE, PVC, Polystyrol u.a. Nachteilig an diesem Verfahren ist, dass das geschützte Lithiummetall eine undefinierte Oberflächenbeschichtung organischer Substanzen bekommt, die bei seiner nachfolgenden Verwendung, beispielsweise für die Vorlithiierung von Elektrodenmaterialien, stören können.

Die Erfindung hat sich die Aufgabe gestellt ein Verfahren zur Herstellung von Lithiummetallpulver mit einer passivierenden Deckschicht anzugeben,
- welches ohne Verwendung gasförmiger oder saurer, ätzender oder giftiger Passivierungsmittel auskommt,
- das nicht die Bildung undefinierter Organika, speziell keiner organischen Polymere zur Folge hat und
- das die Ausbildung einer passivierenden Schutzschicht bestehend aus einem anorganischen schwerlöslichen Salzfilm auf der Lithiumoberfläche bewirkt und
- dessen Oberflächenbeschichtung beim Einsatz beispielsweise als Vorlithiierungsmittel für Anodenmaterialien nicht stört.

Ein solches Lithiummetallpulver sollte in Gegenwart polarer, reaktiver Lösungsmittel, wie sie für die Herstellung von Elektrodenbeschichtungen eingesetzt werden (beispielsweise NMP) mindestens bis etwa 50°C über Tage stabil sein.

Erfindungsgemäß wird die Aufgabe dadurch gelöst, dass unter Verwendung von ungesättigte Fettsäuren, ausgewählt aus der Gruppe bestehend aus Ölsäure, Stearinsäure, Palmitinsäure, Laurinsäure, Myristinsäure, Margarinsäure, Palmitoleinsäure, Linolsäure, Linolensäure, in reiner Form oder Mischungen daraus oder deren Ester, beispielsweise die Triglyceride, Ethylate, Propanolate oder Butylate oder natürliche Öle, ausgewählt aus der Gruppe bestehend aus Rapsöl, Olivenöl, Sonnenblumenöl oder Leinsamenöl als Passivierungsmittel, wobei reines Lithiummetall mit einen Natriumgehalt < 100 ppm oberhalb 180 °C unter Dispergierbedingungen mit dem Passivierungsmittel in Mengen von 1 g bis 10 g pro kg Lithiummetall in einem inerten organischen Lösungsmittel umgesetzt wird. Es wurde überraschend gefunden, dass beim Einsatz natriumarmen Lithiummetalls ganz besonders stabile, sicher handhabbare Produkte gewonnen werden können.

Das Lithium wird zunächst unter Inertgas (Edelgas, beispielsweise trockenes Argon) in einem organischen, inerten Lösungsmittel oder Lösemittelgemisch (in der Regel kohlenwasserstoffbasiert) bis über die Schmelzpunkttemperatur (180,5°C) aufgewärmt. Dieser Prozess kann beim Einsatz von Lösungsmitteln mit Siedetemperaturen > 180°C (beispielsweise Undekan, Dodekan oder entsprechenden handelsüblichen Mineralölgemischen, beispielsweise Shellsole) bei Normaldruck erfolgen. Werden demgegenüber leichter flüchtige Kohlenwasserstoffe wie z.B. Hexan, Heptan, Octan, Dekan, Toluol, Ethylbenzol oder Cumol eingesetzt, so erfolgt der Aufschmelzprozess in einem geschlossenen Gefäß unter Druckbedingungen.

Nach dem vollständigen Aufschmelzen wird das Passivierungsmittel zugegeben und das zur Dispersionsherstellung verwendete Rührwerk (in der Regel eine Dispergierscheibe) in Betrieb gesetzt. Die genauen Dispergierparameter (d.h. hauptsächlich die Rotationsgeschwindigkeit und die Dispergierzeit) richten sich nach der gewünschten Partikelgröße. Sie sind weiterhin von der Viskosität des Dispergierlösemittels sowie individuellen geometrischen Parametern des Rührorgans (z.B. Durchmesser, genaue Stellung und Größe der Zähnung) abhängig. Die Feinabstimmung des Dispergierverfahrens zur Bereitung der gewünschten Partikelverteilung kann der Fachmann durch entsprechende Experimente leicht bewerkstelligen.

Sollen Lithiumpartikel im Korngrößenbereich zwischen 5 und 100 µm hergestellt werden, so beträgt die Rührfrequenz im Allgemeinen zwischen 1.000 und 25.000 upm, bevorzugt 2.000 bis 20.000 upm. Die Dispergierzeit, d.h. der Zeitraum, innerhalb dessen das Dispergierwerkzeug mit voller Leistung läuft, beträgt zwischen 1 und 30 Minuten, vorzugsweise 2 und 15 Minuten.

Das Passivierungsmittel kann bereits zusammen mit dem Metall und dem Lösungsmittel vor Beginn der Aufheizphase zugegeben werden. Bevorzugt wird es aber erst nach dem Aufschmelzen des Metalls, d.h. bei Temperaturen > 180°C zugegeben. Die Zugabe kann unkontrolliert (d.h. in einer Portion) während des Dispergierprozesses erfolgen. Bevorzugt wird das Passivierungsmittel aber über einen Zeitraum von ca. 5 s bis 1000 s, besonders bevorzugt 30 s bis 500 s zugegeben.

Als Passivierungsmittel werden Fettsäuren oder Fettsäureester gemäß Anspruch 1 verwendet. Diese Hilfsmittel haben den Vorteil, dass sie kommerziell verfügbar und ungiftig sind, keinen nennenswerten Dampfdruck aufweisen und auf der Metalloberfläche einen nicht störenden Film, bestehend aus den Elementen Sauerstoff, Kohlenstoff und Wasserstoff, aufbauen. Zu versendund Passivierungsmittel sind: Ölsäure (Oleinsäure), Stearinsäure, Palmitinsäure, Laurinsäure, Myristinsäure, Margarinsäure, Palmitoleinsäure, Linolsäure, Linolensäure, entweder in reiner Form oder Mischungen daraus. Weiterhin können deren Ester, beispielsweise die Fettsäureglyceride oder die Ester mit einwertigen Alkoholen, z.B. die Ethylate, Propanolate oder Butylate verwendet werden. Besonders bevorzugt können auch Naturprodukte wie Rapsöl, Olivenöl, Sonnenblumenöl oder Leinsamenöl eingesetzt werden. Von den genannten Passivierungsmitteln werden in set 1 bis 10 g Passivierungsmittel pro kg Lithiummetall. Eingesetzt die genaue Menge richtet sich nach der Konzentration funktioneller Gruppen (das sind z.B. Carbonsäure- oder Carboxylatgruppen) im Passivierungsmittel sowie nach der Feinheit des zu generierenden Metallpulvers: je feiner dieses ist, desto größer ist dessen spezifische Oberfläche und demzufolge auch der Bedarf an Passivierungsmittel.

Das Lithiummetall wird in reiner Form eingesetzt, d.h. die metallischen Verunreinigungen müssen in Summe unter 500 ppm liegen. Insbesondere ist der Natriumgehalt auf maximal 100 ppm begrenzt. Bevorzugt liegt der Na-Gehalt < 50 ppm. Solchermaßen natriumarme Lithiummetallpulver, die nach dem oben beschriebenen Verfahren mittels Fettsäuren oder Fettsäureestern passiviert sind, erweisen sich überraschend als ganz besonders stabil im Kontakt mit reaktiven, polaren Lösungsmitteln, beispielsweise N-Methyl-2-pyrrolidon.

Die mittlere Partikelgröße der erfindungsgemäßen Metallpulver liegt bei maximal 200 µm, bevorzugt bei maximal 100 µm und besonders bevorzugt bei maximal 50 µm.

Im Sinne der Erfindung ist es auch möglich, das mit Fettsäuren oder Fettsäureestern passivierte Metallpulver durch ein Zusatzcoating noch stärker zu stabilisieren. Als Coatingmittel sind dazu z.B. phosphorhaltige Verbindungen (wie Phosphorsäure, Lithium *tris*(oxalato)phosphat), Fluorierungsmittel (z.B. Perfluorpentylamin), Wachse (z.B. Polyethylenwachs) oder Polymerbeschichtungen (z.B. mit PU, PTFE, PVC oder Polystyrol) geeignet. Diese Zusatzpassivierung wird in einem Kohlenwasserstofflösemittel bei Temperaturen unterhalb des Lithiumschmelzpunktes (also < 180,5°C) vorgenommen.

Das erfindungsgemäße Lithiummetallpulver zeigt im DSC-Test in Suspension mit N-Methyl-2-pyrrolidon (Wassergehalt < ca. 200 ppm) bei mindestens 15-stündiger Lagerung bei 50°C und besonders bevorzugt bei 100°C keinen signifikanten exothermen Effekt, insbesondere kein "run-away-Phänomen". Dieses Verhalten wird anhand der folgenden Beispiele erläutert.

Die Erfindung wird nachfolgend an Hand von einem Beispiel, einem Vergleichsbeispiel und fünf Abbildungen näher erläutert, ohne dass dadurch die beanspruchte Ausführungsbreite beschränkt werden soll.

Es zeigen:

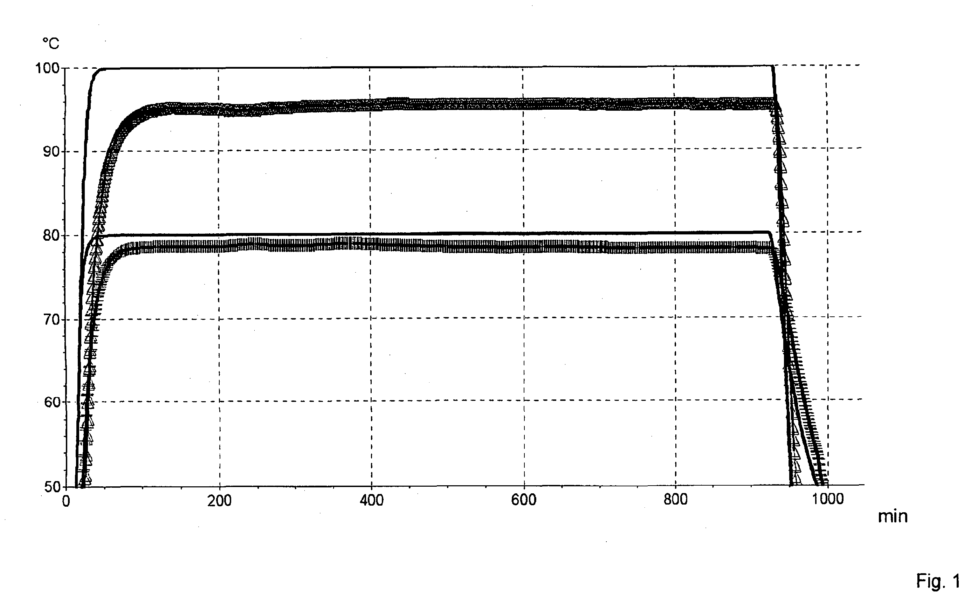

- Figur 1:: Thermisches Verhalten bei Lagerung des Metallpulvers gemäß Beispiel 1 in NMP bei 80 und 100°C **Ofentemperatur (-) und Probentemperatur (+, Δ)**

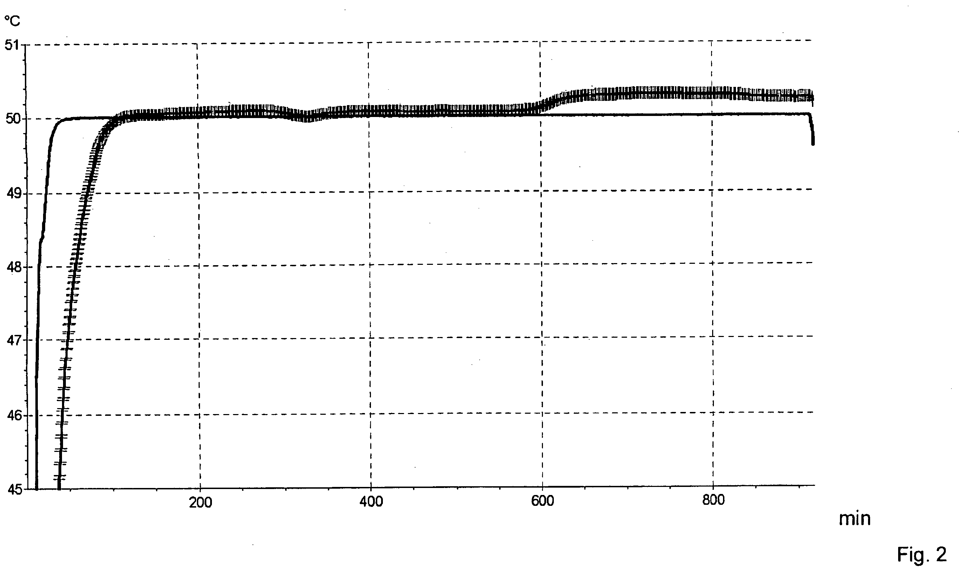

- Figur 2:: Thermisches Verhalten bei Lagerung des Metallpulvers gemäß Vergleichsbeispiel 1 in NMP bei 50°C **Ofentemperatur (-) und Probentemperatur (+)**

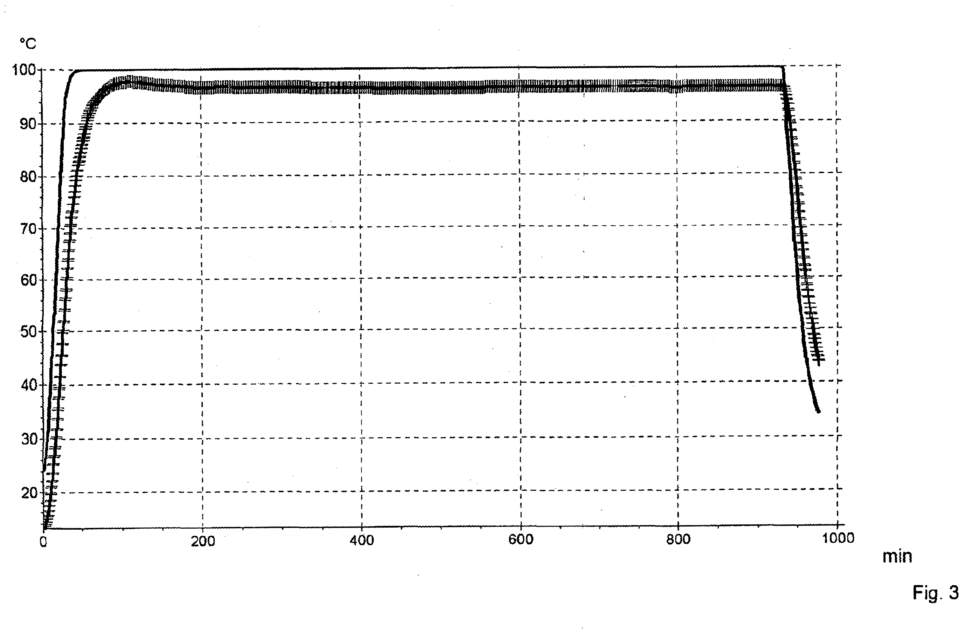

- Figur 3:: Thermisches Verhalten bei Lagerung eines Metallpulvers (Na-Gehalt 17 ppm) erhalten gemäß Beispiel 1 in NMP mit einem Wassergehalt von 1 %, **Ofentemperatur (-) und Probentemperatur (+,Δ)**

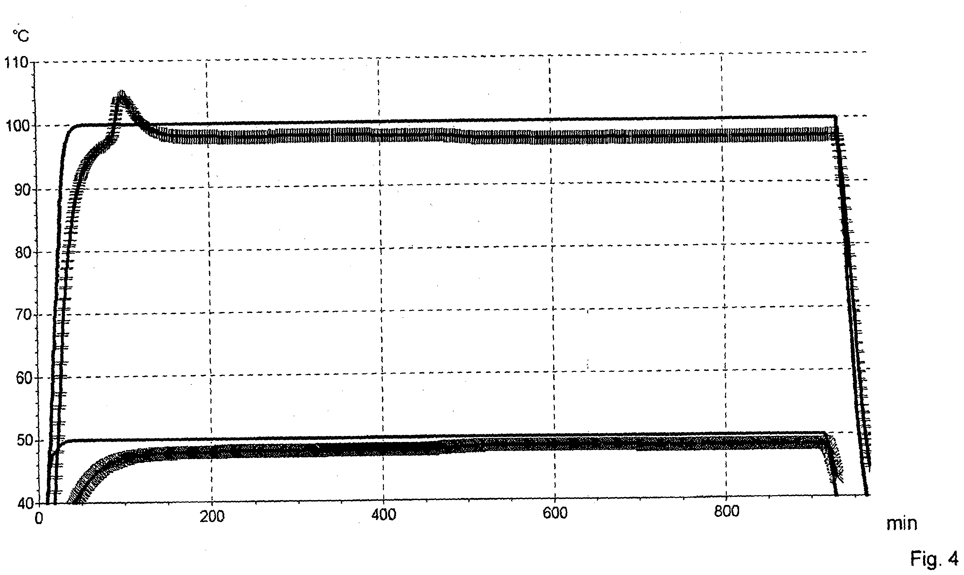

- Figur 4:: Thermisches Verhalten bei Lagerung eines Metallpulvers mit einem Na-Gehalt von 55 ppm erhalten gemäß Beispiel 1 bei 50 und 100°C Ofentemperatur (-) **und Probentemperatur (+, x)** in NMP (148 ppm Wassergehalt)

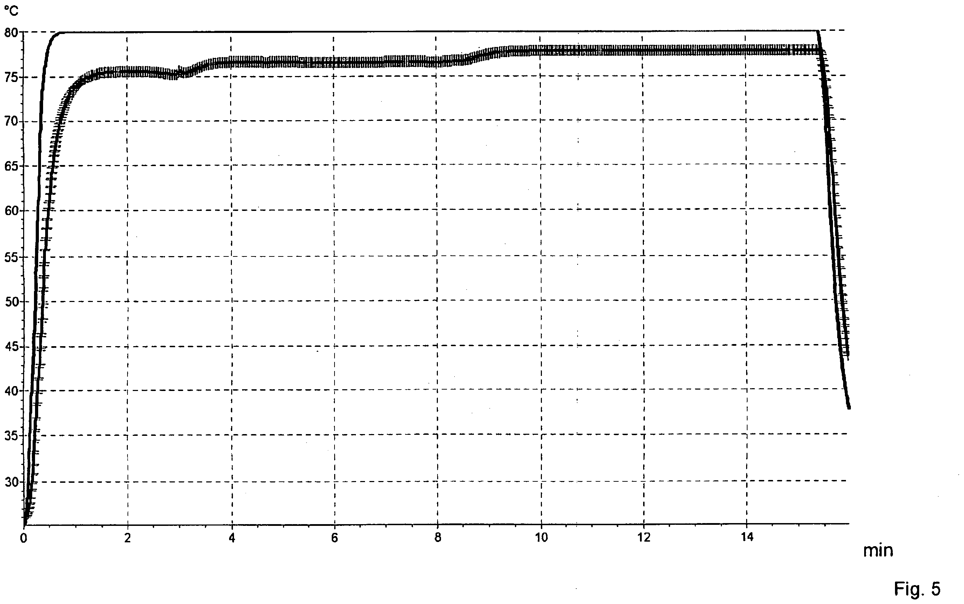

- Figur 5:: Thermisches Verhalten bei Lagerung eines Metallpulvers mit einem Na-Gehalt von 55 ppm erhalten gemäß Beispiel 1 bei 80°C **Ofentemperatur (-) und Probentemperatur (+)** in NMP (200 ppm Wassergehalt)

### Beispiel 1: Herstellung eines mit Leinöl passivierten natriumarmen Lithiummetallpulvers

In einem trockenen mit Argon inertisierten 2 L-Edelstahldoppelmantelreaktor mit einem Dispergierrührwerk werden 399 g Shellsol D 100 und 19,4 g Lithiummetallstabschnitte vorgelegt. Das Lithium hat einen Natriumgehalt von 17 ppm. Unter sehr langsamem Rühren (ca. 50 rpm) wird durch Mantelheizung die Innentemperatur auf 205°C angehoben. Dann werden 0,05 g Leinsamenöl mit einer Spritze zugegeben. Die Rührfrequenz wird auf 3600 rpm gesteigert und 6 Minuten beibehalten. Dann wird der Rührer gestoppt und die Suspension auf Zimmertemperatur abgekühlt.

Die Suspension wird auf eine Glasnutsche abgelassen, der Filterrückstand mehrmals mit Hexan ölfrei gewaschen und dann vakuumgetrocknet.
Ausbeute: 15,6 g (80 % d.Th.)
Mittlere Partikelgröße: ca. 50 µm (REM-Bildauswertung)

### Vergleichsbeispiel 1: Herstellung eines mit Leinöl passivierten natriumreichen Lithiummetallpulvers

In einem trockenen, mit Argon inertisierten 2 L-Edelstahldoppelmantelreaktor mit einem Dispergierrührwerk werden 525 g Shellsol D 100, 32,3 g Lithiummetallstabschnitte und 0,11 g Natrium vorgelegt. Das Lithium hat einen Natriumgehalt von 17 ppm. Unter sehr langsamem Rühren (ca. 50 rpm) wird durch Mantelheizung die Innentemperatur auf 205°C angehoben. Dann werden 0,09 g Leinsamenöl mit einer Spritze zugegeben. Die Rührfrequenz wird auf 3600 rpm gesteigert und 6 min beibehalten. Dann wird der Rührer gestoppt und die Suspension auf Zimmertemperatur abgekühlt.

Die Suspension wird auf eine Glasnutsche abgelassen, der Filterrückstand mehrmals mit Hexan ölfrei gewaschen und dann vakuumgetrocknet.
Ausbeute: 27,3 g (84% d.Th.)
Mittlere Partikelgröße: ca. 50 µm (REM-Bildauswertung)
Na-Gehalt (FES): 0,3 %

### Beispiel 2: Lagerung des Metallpulvers aus Beispiel 1 in NMP bei 80 und 100°C (DSC-Test)

Für DSC -Tests ("differential scanning calorimetry") wurde eine Apparatur der Firma Systag, Schweiz (das Radex-System) eingesetzt. In die Probengefäße wurden unter Schutzgasatmosphäre etwa 2 g NMP und 0,1 g Lithiummetallpulver eingewogen. Proben wurden bei bestimmten Temperaturen 15 h gelagert.

### Vergleichsbeispiel 2: Lagerung des nicht erfindungsgemäßen Metallpulvers aus Vergleichsbeispiel 1 in NMP bei 50°C (DSC-Test)

Aus Beispiel 2 und Vergleichsbeispiel 2 geht die wesentlich verbesserte Stabilität des erfindungsgemäßen Lithiummetallpulvers im Kontakt mit NMP hervor: während das erfindungsgemäße Produkt weder bei der 80- noch 100°C - Lagerung signifikante exotherme Effekte verursacht (die Probentemperatur bleibt die gesamte Beobachtungszeit deutlich unter der Ofentemperatur), reagiert das nichterfindungsgemäße Metallpulver bereits bei der 50°C-Lagerung deutlich exotherm. Dies erkennt man daran, dass die Probentemperatur die Ofentemperatur deutlich übersteigt.

### Beispiel 3: Lagerung des Metallpulvers (Na-Gehalt 17 ppm) aus Beispiel 1 in NMP mit einem Wassergehalt von 1 % (DSC-Test)

Das besonders bevorzugte Li-Metallpulver mit einem Na-Gehalt von 17 ppm erweist sich selbst in wasserreichem NMP als kinetisch stabil.

### Beispiel 4: Lagerung eines erfindungsgemäß hergestellten Lithiummetallpulvers mit einem Na-Gehalt von 55 ppm bei 50 und 100°C in NMP (148 ppm Wassergehalt) (DSC-Test)

### Beispiel 5: Lagerung eines erfindungsgemäß hergestellten Lithiummetallpulvers mit einem Na-Gehalt von 55 ppm bei 80°C in NMP (200 ppm Wassergehalt) (DSC-Test)

Das Metallpulver mit einem Natriumgehalt von 55 ppm ist bei Lagertemperaturen von 50 und 80°C stabil, es zeigt aber bei 100°C ein Exotherm, allerdings keinen run-away-Effekt. Nach dem DSC-Experiment bei 100°C liegen noch 73% des eingesetzten Lithiums in metallischer Form vor.

## Patentansprüche

1. Verwendung von ungesättigte Fettsäuren, ausgewählt aus der Gruppe bestehend aus Ölsäure, Stearinsäure, Palmitinsäure, Laurinsäure, Myristinsäure, Margarinsäure, Palmitoleinsäure, Linolsäure, Linolensäure, in reiner Form oder Mischungen daraus oder deren Ester, beispielsweise die Triglyceride, Ethylate, Propanolate oder Butylate oder natürliche Öle, ausgewählt aus der Gruppe bestehend aus Rapsöl, Olivenöl, Sonnenblumenöl oder Leinsamenöl als Passivierungsmittel bei der Herstellung eines stabilisierten Lithiummetallpulvers, wobei reines Lithiummetall mit einen Natriumgehalt < 100 ppm oberhalb 180 °C unter Dispergierbedingungen mit dem Passivierungsmittel in Mengen von 1 g bis 10 g pro kg Lithiummetall in einem inerten organischen Lösungsmittel umgesetzt wird.

2. Verwendung nach Anspruch 1, **dadurch gekennzeichnet, dass** als inertes, organisches Lösungsmittel Kohlenwasserstoffe, ausgewählt aus der Gruppe bestehend aus Hexan, Heptan, Octan, Dekan, Undekan, Dodekan, Toluol, Ethylbenzol, Cumol, entweder in reiner Form oder im Gemisch als kommerziell erhältliche Siedeschnitte eingesetzt werden.

## Claims

1. Use of unsaturated fatty acids, selected from the group consisting of oleic acid, stearic acid, palmitic acid, lauric acid, myristic acid, margaric acid, palmitoleic acid, linoleic acid, linolenic acid, in pure form or mixtures thereof or their esters, for example the triglyceride, ethylate, propanolate or butylate, or natural oils, selected from the group consisting of rapeseed oil, olive oil, sunflower oil, or flaxseed oil as a passivating agent in the production of a stabilized lithium metal powder, wherein pure lithium metal with a sodium content < 100 ppm is reacted above 180°C under dispersing conditions with the passivating agent in amounts of 1 g to 10 g per kg of lithium metal in an inert organic solvent.

2. Use of claim 1, **characterized in that** as an inert, organic solvent hydrocarbons selected from the group consisting of hexane, heptane, octane, decane, undecane, dodecane, toluene, ethylbenzene, cumene, in pure form or in a mixture as commercially available boiling cuts will be used.

## Revendications

1. Utilisation d'acides gras insaturés, choisis dans le groupe comprenant l'acide oléique, l'acide stéarique, l'acide palmitique, l'acide laurique, l'acide myristique, l'acide margarique, l'acide palmitoléique, l'acide linoléique, l'acide linolénique, sous leur forme pure ou sous forme de mélanges de ces acides ou de leurs esters, par exemple les triglycérides, les éthylates, les propanoates ou les butylates, ou d'huiles naturelles, choisies dans le groupe comprenant l'huile de colza, l'huile d'olive, l'huile de tournesol ou l'huile de lin, en tant que passivants lors de la fabrication d'une poudre de lithium métallique stabilisée, où le lithium métallique pur, avec une teneur en sodium < 100 ppm, est transformé, au-dessus de 180 °C, dans des conditions de dispersion, avec le passivant en quantités allant de 1 g à 10 g par kg de lithium métallique, dans un solvant organique inerte.

2. Utilisation selon la revendication 1, **caractérisée en ce que** l'on utilise comme solvant organique inerte, des hydrocarbures choisis dans le groupe comprenant l'hexane, l'heptane, l'octane, le décane, l'undécane, le dodécane, le toluène, l'éthylbenzène, le cumène, soit sous leur forme pure soit sous forme de mélange, en tant que coupes de distillation disponibles dans le commerce.
